# EUROPEAN PATENT APPLICATION

(11) **EP 4 393 610 A1**
(43) Date of publication of application: **03.07.2024**
(21) Application number: 21954799.9
(22) Date of filing: 19.11.2021
(51) Int. Cl.: B08B 5/02, B08B 13/00

(54) **DUST REMOVER WITH PORTABLE POWER SUPPLY FUNCTION**

(30) Priority: 26.08.2021 CN 202122036358 U
(71) Applicant: Sysmax Innovations Co., Ltd., Guangzhou, Guangdong 510623 (CN)
(72) Inventor: LI, Wenjie, Guangzhou, Guangdong 510623 (CN)
(74) Representative: Danubia Patent & Law Office LLC
(86) International application number: PCT/CN2021/131722
(87) International publication number: WO 2023/024280

(57) **Abstract**

The present application provides a dust collector with a portable power source function, comprises a first air inlet and a first air outlet are formed in an inner housing, an air flow channel and accommodation space at an interval are defined in the inner housing, the first air inlet is communicated with the first air outlet through the air flow channel, and a centrifugal fan is arranged in the air flow channel; a second air inlet and a second air outlet are formed in an outer housing, the second air inlet is opposite to the first air inlet, the second air outlet is opposite to the first air outlet, and the second air inlet is communicated with the second air outlet through the air flow channel; the dust collector can output an air flow with a stable air volume, and has a portable power source function.

## Description

### CROSS-REFERENCE TO RELATED APPLICATIONS

This application is a continuation of International Application No. PCT/CN2021/131722, filed on November 19, 2021, which claims priority to Chinese Patent Application No. 202122036358.8, filed on August 26, 2021. All of the aforementioned applications are incorporated herein by reference in their entireties.

### TECHNICAL FIELD

The present application relates to the technical field of photographic equipment, and in particular, to a dust collector with a portable power source function.

### BACKGROUND

In photography industry, dust usually falls on a lens with the use of a user. Since a surface of the lens is coated with a coating, wiping the lens without blowing away dust particles first is equivalent to a piece of sandpaper, which has a great damage to the lens. The user often blows the dust on the lens by using a manual air blower. However, a conventional manual air blower, that is, a rubber air blower, requires the user to manually press to blow air. The user will feel pain, soreness, and swelling in his/her hands after continuous use. In addition, the rubber air blower requires manual pressing, as the pressing force varies each time, the amount of air blown out varies, resulting in poor dust cleaning effect. Meanwhile, due to intrinsic characteristics of rubber air blower, an air flow is generated by pressing the rubber air blower, so an air nozzle will flutter up and down under the impact of the air flow. In addition, the material of the rubber determines that the service life of the air blower is short. With the aging of the rubber, rubber particles are possible to impact the lens with the air flow, which has a poor dust blowing and cleaning effect on the lens, but also causes further contamination of the lens. In addition, an application scenario of a dust blower with a single function is single. With the continuous development of digitalization related technologies, there are more and more portable electronic products. For the photography industry, the number of portable electronic products is increasing more significantly. Conventional accessory designs can only use electrical energy for some photography related functions, but cannot meet additional functions of the electronic products. The efficiency will be reduced if the electric energy is insufficient in a photographic process. Therefore, if a dust collector with a portable charging function can be provided, it is more convenient for the user, the portable electronic devices are charged, and use scenarios of the devices are improved and extended.

### SUMMARY

In view of this, it is necessary to provide a dust collector with a portable power source function for the above problems, which can generate a stable air flow to blow dust away from a lens of a photographic device. Meanwhile, the dust collector has the portable power source, and can provide power support for other devices.

The dust collector with a portable power source function according to an embodiment of the present application includes an inner housing, herein a first air inlet and a first air outlet are formed in the inner housing, an air flow channel is defined in the inner housing, the first air inlet is communicated with the first air outlet through the air flow channel, a centrifugal fan is arranged in the air flow channel, accommodation space is also defined in the inner housing, the accommodation space is separated from the air flow channel; a Printed Circuit Board (PCB), herein the PCB is arranged in the accommodation space; a battery, the battery is arranged in the accommodation space, the battery and the PCB are arranged in a stacked manner, the battery is electrically connected with the PCB, and the battery is capable of storing and discharging electricity; an outer housing, herein a second air inlet and a second air outlet are formed in the outer housing, the second air inlet is opposite to the first air inlet, the second air outlet is opposite to the first air outlet, mounting space is defined in the outer housing, the inner housing is arranged in the mounting space, and the second air inlet is communicated with the second air outlet through the air flow channel; and a charge interface, herein the charge interface is arranged on the outer housing, the charge interface penetrates through the inner housing to electrically connect the battery, the charge interface is a TYPE-C interface, and the charge interface is capable of realizing a charging or discharging function.

Specifically, an air flow is driven by the centrifugal fan to flow into the air flow channel from the first air inlet, and flows out of the air flow channel through the first air outlet. When the first air outlet is aligned with a lens of a photographic device, dust on a surface of the lens may be blown away through the air flow blown from the first air outlet. Since the centrifugal fan may run stably, an air volume of the air flow blown from the first air outlet may be output stably.

The dust collector with a portable power source function according to an embodiment of the present application may output the air flow with a stable air volume without a manual operation, has a good dust blowing effect on the lens, has a function of a portable power source, can provide power replenishment for other devices, enriches application scenarios of the dust collector, and can improve user satisfaction.

In the dust collector with a portable power source function according to an embodiment of the present application, a filter mesh that covers the first air inlet is arranged at the first air inlet, and a plurality of filter mesh holes in an array are formed in the filter mesh. The filter mesh can filter the air flow that enters the air flow channel to prevent a particulate pollutant from impacting the lens of the photographic device with the air flow, which further improves the dust blowing effect of the dust collector on the photographic device.

Optionally, a filter mesh bracket is arranged on the outer housing; the filter mesh bracket is arranged in a circumferential direction of the second air inlet; a filter mesh mounting cover is arranged on the filter mesh bracket; and the filter mesh is arranged on the filter mesh mounting cover. The filter mesh is fixed to the outer housing through the filter mesh bracket and the filter mesh mounting cover, so that the filter mesh is convenient to detach and replace.

Optionally, a filter element is arranged between the filter mesh and the filter mesh bracket; and the filter element is opposite to the second air inlet. The filter element is arranged to further filter dust particles of the air flow that enters the air flow channel through the second air inlet, so as to further improve the cleanness of the air flow in the air flow channel.

Optionally, an air-inlet grille is arranged on the inner housing; and the air-inlet grille defines the first air inlet. The air-inlet grille is arranged to support the filter element, so as to prevent the filter element from moving with the air flow.

Optionally, a side wall of a limiting boss is wavy and curved, a side wall of a limiting column is wavy and curved, and the side wall of the limiting column and the side wall of the limiting boss are embedded with each other. Thus, the inner housing can be limited better to prevent the inner housing from shaking in the outer housing.

Optionally, an air duct is arranged in the accommodation space. An air guide strip of the inner housing defines the air flow channel. A yielding slot is formed in an inner side wall of the air guide strip. The air duct is embedded into the yielding slot. Thus, the inner housing can be further limited to prevent the inner housing from shaking in the outer housing.

Optionally, a plurality of support ribs arranged at intervals are formed on an outer wall surface of the inner housing. The plurality of support ribs may support the outer housing to prevent the outer housing from deforming due to the grip or collision of a user when the outer housing is thin because of the requirement of weight.

Optionally, the dust collector further includes a silicone air guide piece. The silicone air guide piece is arranged on an outer wall surface of an air outlet end of the outer housing in a sleeving manner. A through hole is formed in the silicone air guide piece; and the through hole is communicated with the air flow channel. Since the dust collector may collide with the lens when the user does not master a force properly when holding a dust blower to remove dust from the lens or the like, the arrangement of the silicone air guide piece can achieve effects of softening and buffering to prevent the lens from being damaged.

Optionally, a first boss is arranged in a circumferential direction of an outer wall surface of the outer housing; a first groove is annularly formed in a circumferential direction of the silicone air guide piece; and the first boss is embedded the first groove. Thus, the silicone air guide piece can be prevented from separating from the outer housing.

Optionally, the inner housing is a plastic piece; and the outer housing is a metal piece. The inner housing is the plastic piece, so that the weight of the overall dust collector can be reduced. Meanwhile, the inner housing is the plastic piece, which can achieve an insulating effect, and prevent the user from being damaged due to internal electricity leakage. In addition, the outer housing is the metal piece, which can improve the structural strength of the dust collector, and meanwhile, improve the high grade level of the dust collector, so that the user is prone to select this product.

The dust collector with a portable power source function according to an embodiment of the present application further includes a switch button. The switch button is arranged on the outer housing, and the switch button penetrates through the inner housing to electrically connect the PCB. The switch button is electrically connected to the PCB, so that the user may control the on and off of the dust collector through the switch button, and meet the requirement of the user on selecting different built-in functions of the dust collector.

The dust collector with a portable power source function according to an embodiment of the present application further includes a light guide silicone piece. The light guide silicone piece is arranged on the outer housing, an indicator lamp is arranged on the PCB, and the light guide silicone piece is opposite to the indicator lamp. The indicator lamp is arranged, which can prompt a working state of the dust collector, so as to improve the use experience of the user.

In the dust collector with a portable power source function according to an embodiment of the present application, the air flow channel includes a volute segment and a straight line segment; the straight line segment is communicated with an air outlet end of the volute segment; and in a direction gradually away volute segment, a cross-section area of the straight line segment is gradually reduced. Thus, the wind force of the air flow that flows out from the first air outlet can be increased, so the force of the air flow can blow particles attached to the surface of the lens to further improve the dust removal effect of the dust collector.

In the dust collector with a portable power source function according to an embodiment of the present application, a hanging ring is arranged on the outer housing; and the hanging ring and the outer housing are integrally formed.

The dust collector with a portable power source function according to an embodiment of the present application further includes a charge and discharge loop; the charge and discharge loop includes a charge and discharge interface, a charge and discharge control circuit, a voltage control circuit, and a human-computer interaction circuit; the charge and discharge interface is electrically connected to the charge interface; and the battery is electrically connected to the voltage control circuit.

In the dust collector with a portable power source function according to an embodiment of the present application, the charge and discharge interface includes a Type-C interface and an over-current monitoring module; the Type-C interface adopts a 24-frame interface and is electrically connected to the charge and discharge control circuit; in a discharging process, the Type-C interface discharges; in a charging process, the Type-C interface charges; the over-current monitoring module is electrically connected to an interface of the Type-C interface; and a charge and discharge current of the Type-C interface is obtained through voltage division of a 0.01-ohm resistor, and is converted into a voltage signal and is transmitted to the charge and discharge control circuit.

In the dust collector with a portable power source function according to an embodiment of the present application, the charge and discharge control circuit includes a low-current mode false load, a load side charge and discharge input capacitor, charge and discharge current limiting resistor, a BOOST-BUCK controller, a BOOST-BUCK full bridge control module, a battery charge and discharge current monitoring resistor, a charge and discharge input/output capacitor, and a power source side charge and discharge input capacitor.

In the dust collector with a portable power source function according to an embodiment of the present application, the human-computer interaction circuit includes a Microcontroller Unit (MCU), an over-temperature protection module, an indicator lamp display module. The MCU adopts a CS32G02X single chip microcomputer; a 23rd pin, a 24 pin, a 25th pin, and a 26th pin of the MCU are electrically connected to the indicator lamp display module to control the on/off of the indicator lamp of the indicator lamp display module 1007, and to display a current remaining electric quantity of the battery 90 through different indicator lamps; a 14th pin of the MCU is configured to receive an electric signal of the over-temperature protection module, and determine whether the dust collector with a portable power source function is in an overheat state.

In the dust collector with a portable power source function according to an embodiment of the present application, the voltage control circuit includes a voltage stabilizing chip. The voltage stabilizing chip adopts ME6203A33M2G. A first pin of the voltage stabilizing chip is grounded. A third pin of the voltage stabilizing chip is connected to a positive electrode of the battery through a diode and a resistor, is grounded at the first pin of the voltage stabilizing chip, and is connected in parallel with the third pin through a capacitor. The third pin of the voltage stabilizing chip serves as an output to provide 3.3V stable voltage to the human-computer interaction circuit and the charge and discharge control circuit.

### BRIEF DESCRIPTION OF THE DRAWINGS

Fig. 1 is an exploded diagram of a dust collector with a portable power source function according to an embodiment of the present application.
Fig. 2 is a three-dimensional diagram of part structures of a dust collector with a portable power source function according to an embodiment of the present application.
Fig. 3 is a three-dimensional diagram of a dust collector with a portable power source function according to an embodiment of the present application.
Fig. 4 is a three-dimensional diagram of part structures of another part of a dust collector with a portable power source function according to an embodiment of the present application.
Fig. 5 is a three-dimensional diagram of a silicone air guide piece of a dust collector with a portable power source function according to an embodiment of the present application.
Fig. 6 is a three-dimensional diagram of the silicone air guide piece of a dust collector with a portable power source function in another perspective according to an embodiment of the present application.
Fig. 7 is a structural diagram of a charge and discharge loop of a dust collector with a portable power source function according to an embodiment of the present application.
Fig. 8 is a structural diagram of a charge and discharge interface of a dust collector with a portable power source function according to an embodiment of the present application.
Fig. 9 is a structural diagram of a charge and discharge control circuit of a dust collector with a portable power source function according to an embodiment of the present application.
Fig. 10 is a structural diagram of a human-computer interaction circuit of a dust collector with a portable power source function according to an embodiment of the present application.
Fig. 11 is a structural diagram of a voltage control circuit of a dust collector with a portable power source function according to an embodiment of the present application.

### DETAILED DESCRIPTION OF THE EMBODIMENTS

To describe the technical solutions in the embodiments of the present application or in the conventional art more clearly, the present application will be further introduced below with reference to specific embodiments and drawings. Apparently, the drawings in the following description are merely some embodiments of the present application, and those of ordinary skill in the art may also obtain other drawings according to these drawings without creative efforts.

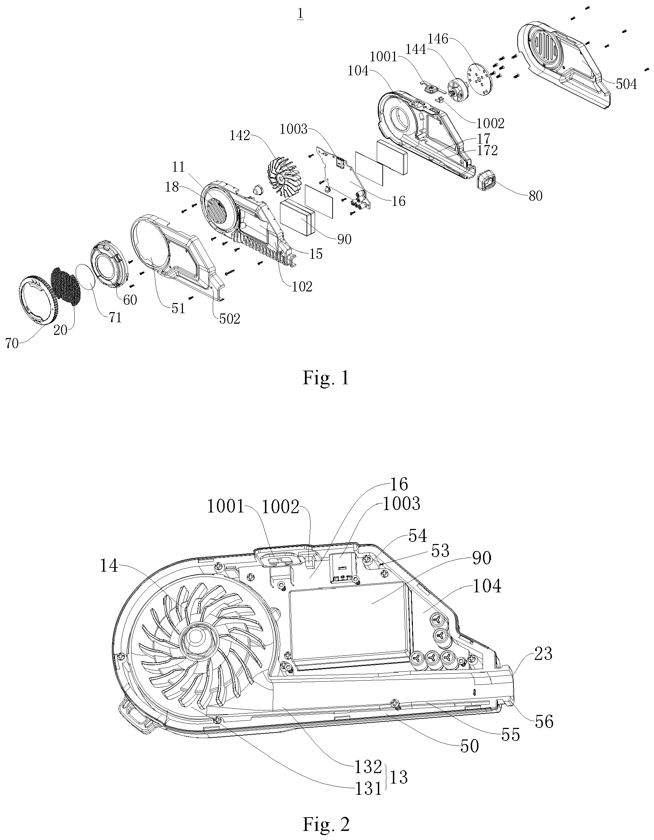

As shown in Fig. 1 and Fig. 2, a dust collector 1 with a portable power source function according to an embodiment of the present application includes an inner housing 10, a PCB 16, a battery 90, an outer housing 50, and a charge interface 1003.

Specifically, a first air inlet 11 and a first air outlet 23 are formed in the inner housing 10, an air flow channel 13 is defined in the inner housing 10, the first air inlet 11 is communicated with the first air outlet 23 through the air flow channel 13, a centrifugal fan 14 is arranged in the air flow channel 13, accommodation space 15 is also defined in the inner housing 10, and the accommodation space 15 is separated from the air flow channel 13.

Specifically, an air flow is driven by the centrifugal fan 14 to flow into the air flow channel 13 from the first air inlet 11, and flows out of the air flow channel 13 through the first air outlet 23. When the first air outlet 23 is aligned with a lens of a photographic device, dust on a surface of the lens may be blown away through the air flow blown from the first air outlet 23. Since the centrifugal fan 14 may run stably, an air volume of the air flow blown from the first air outlet 23 may be output stably.

The PCB 16 is arranged in the accommodation space 15. The battery 90 is arranged in the inner housing 10. The battery 90 and the PCB 16 are arranged in a stacked manner. The battery 90 is electrically connected with the PCB 16. The battery 90 is capable of storing and discharging electricity, so that the dust collector 1 can realize a function of the portable power source. A second air inlet 51 and a second air outlet are formed in the outer housing 50. The second air inlet 51 is opposite to the first air inlet 11. The second air outlet is opposite to the first air outlet 23. Mounting space 53 is defined in the outer housing 50. The inner housing 10 is arranged in the mounting space 53. The second air outlet 51 is communicated with the second air outlet through the air flow channel 13. The charge interface 1003 is arranged on the outer housing 50. The charge interface 1003 penetrates through the inner housing 10 to electrically connect the battery 90. The charge interface 1003 is a TYPE-C interface. The charge interface 1003 is capable of realizing a charging or discharging function.

It is to be understood that the battery 90 is configured to store electricity to provide power support for the PCB 16. The battery 90 may be charged through the charge interface 1003 after the battery 90 is out of power, which effectively prolongs the service life of the battery 90, and recycles the battery 90, and improves the use experience of a user. Meanwhile, the battery 90 may store electricity to provide power support for other devices to be charged, which may be implemented by connecting wire between the charge interface 1003 and a device to be charged to realize electric connection, thereby increasing application scenarios of the dust collector 1.

The dust collector 1 with a portable power source function according to an embodiment of the present application may output the air flow with a stable air volume without a manual operation, has a good dust blowing effect on the lens, has a function of a portable power source, can provide power replenishment for other devices, enriches the application scenarios of the dust collector 1, and can improve user satisfaction.

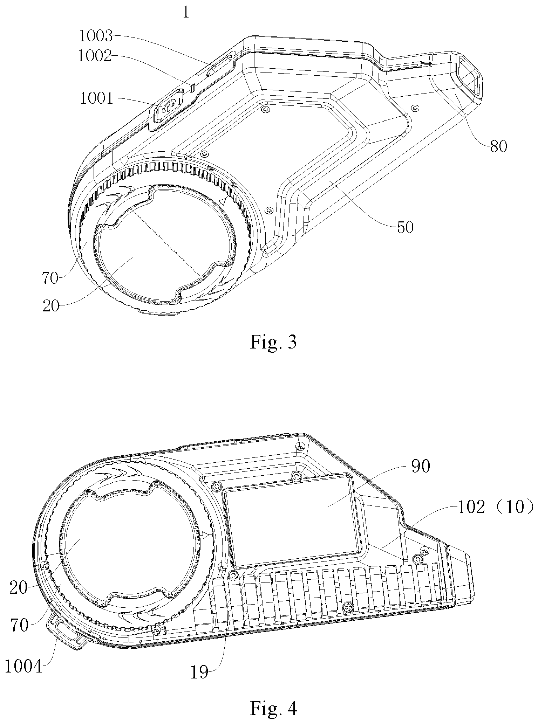

As shown in Fig. 3, in the dust collector 1 with a portable power source function according to an embodiment of the present application, a filter mesh 20 that covers the first air inlet 11 is arranged at the first air inlet 11, and a plurality of filter mesh holes in an array are formed in the filter mesh 20. The filter mesh 20 can filter the air flow that enters the air flow channel 13 to prevent a particulate pollutant from impacting the lens of the photographic device with the air flow, which further improves the dust blowing effect of the dust collector 1 on the photographic device.

As shown in Fig. 1 and Fig. 2, in the dust collector 1 with a portable power source function according to an embodiment of the present application, a plurality of limiting bosses 54 are formed in the mounting space 53; a plurality of limiting columns are formed on an outer wall of the inner housing 10; and the limiting columns are matched with the limiting bosses 54 one by one. The outer housing 50 covers the inner housing 10, so that other functional modules and the like may be arranged on the outer housing 50. Thus, structural arrangement of the inner housing 10 may be simplified, and the difficulty in forming the inner housing 10 can be reduced. In addition, the arrangement of the outer housing 50 can also improve the structural strength of the dust collector 1.

As shown in Fig. 1 and Fig. 3, optionally, a filter mesh bracket 60 is arranged on the outer housing 50; the filter mesh bracket 60 is arranged in a circumferential direction of the second air inlet 51; a filter mesh mounting cover 70 is arranged on the filter mesh bracket 60; and the filter mesh 20 is arranged on the filter mesh mounting cover 70. The filter mesh 20 is fixed to the outer housing 50 through the filter mesh bracket 60 and the filter mesh mounting cover 70, so that the filter mesh 20 is convenient to detach and replace.

As shown in Fig. 1 and Fig. 3, optionally, a filter element 71 is arranged between the filter mesh 20 and the filter mesh bracket 60; and the filter element 71 is opposite to the second air inlet 51. The filter element 71 is arranged to further filter dust particles of the air flow that enters the air flow channel 13 through the second air inlet 51, so as to further improve the cleanness of the air flow in the air flow channel 13. The filter element 71 may be replaced periodically.

As shown in Fig. 1, optionally, an air-inlet grille 18 is arranged on the inner housing 10; and the air-inlet grille 18 defines the first air inlet 11. The air-inlet grille 18 is arranged to support the filter element 71, so as to prevent the filter element 71 from moving with the air flow.

Optionally, a side wall of a limiting boss 54 is wavy and curved, a side wall of a limiting column is wavy and curved, and the side wall of the limiting column and the side wall of the limiting boss 54 are embedded with each other. Thus, the inner housing 10 can be limited better to prevent the inner housing 10 from shaking in the outer housing 50.

As shown in Fig. 2, optionally, an air duct 55 is arranged in the accommodation space 15, an air guide strip 17 of the inner housing 10 defines the air flow channel 13, a yielding slot 172 is formed in an inner side wall of the air guide strip 17, and the air duct 55 is embedded into the yielding slot 172. Thus, the inner housing 10 can be further limited to prevent the inner housing 10 from shaking in the outer housing 50.

As shown in Fig. 4, optionally, a plurality of support ribs 19 arranged at intervals are formed on an outer wall surface of the inner housing 10. The plurality of support ribs 19 may support the outer housing 50 to prevent the outer housing 50 from deforming due to the grip or collision of a user when the outer housing 50 is thin because of the requirement of weight.

As shown in Fig. 1, in the dust collector 1 with a portable power source function according to an embodiment of the present application, the inner housing 10 includes a first housing 102 and a second housing 104. The first housing 102 and the second housing 104 are buckled to define the air flow channel 13 together. Thus, the difficulty in machining the inner housing 10 can be reduced.

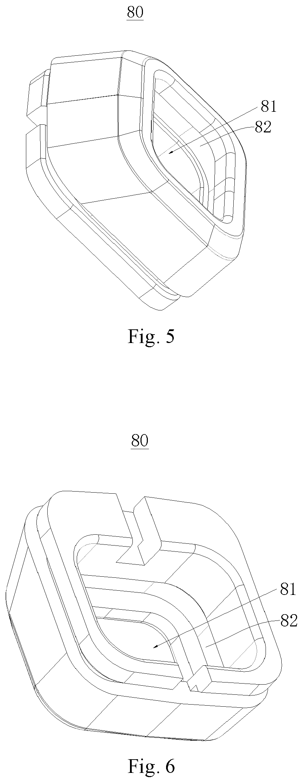

As shown in Fig. 4 to Fig. 6, optionally, the dust collector 1 further includes a silicone air guide piece 80. The silicone air guide piece 80 is arranged on an outer wall surface of an air outlet end of the outer housing 50 in a sleeving manner. A through hole 81 is formed in the silicone air guide piece 80. The through hole 81 is communicated with the air flow channel 13. Since the dust collector 1 may collide with the lens when the user does not master a force properly when holding a dust blower to remove dust from the lens or the like, the arrangement of the silicone air guide piece 80 can achieve effects of softening and buffering to prevent the lens from being damaged. In some embodiments, the inner housing 10 includes a first housing 102 and a second housing 104. The first housing 102 and the second housing 104 are buckled to define the air flow channel 13 together. The silicone air guide piece 80 can further strengthen the connection between the first housing 102 and the second housing 104.

As shown in Fig. 2, optionally, a first boss 56 is arranged in a circumferential direction of an outer wall surface of the outer housing 50; a first groove 82 is annularly formed in a circumferential direction of the silicone air guide piece 80. The first boss 56 is embedded the first groove 82. Thus, the silicone air guide piece 80 can be prevented from separating from the outer housing 50.

As shown in Fig. 1 and Fig. 2, optionally, the inner housing 10 includes a first housing 102 and a second housing 104. The first air inlet 11 is formed in the first housing 102. The first housing 102 and the second housing 104 define the air flow channel 13 together. The first housing 102 and the second housing 104 define the first air outlet 23 together. The first shell 502 and the second shell 504 are buckled to define the accommodation space 15 together. Thus, the difficulty in machining the inner housing 10 can be reduced.

As shown in Fig. 1 and Fig. 2, optionally, the outer housing 50 includes a first shell 502 and a second housing 504. The first shell 502 and the second shell 504 define the mounting space 53 together. The inner housing 10 is arranged in the mounting space 53. Thus, the difficulty in machining the outer housing 50 can be reduced, and meanwhile, the mounting of the inner housing 10 in the accommodation space 15 can be facilitated.

Optionally, the inner housing 10 is a plastic piece. The outer housing 50 is a metal piece. The inner housing 10 is the plastic piece, so that the weight of the overall dust collector 1 can be reduced. Meanwhile, the inner housing 10 is the plastic piece, which can achieve an insulating effect, and prevent the user from being damaged due to internal electricity leakage. In addition, the outer housing 50 is the metal piece, which can improve the structural strength of the dust collector 1, and meanwhile, improve the high grade level of the dust collector 1, so that the user is prone to select this product.

As shown in Fig. 1 to Fig. 3, a dust collector 1 with a portable power source function according to an embodiment of the present application further includes a switch button 1001. The switch button 1001 is arranged on the outer housing 50. The switch button 1001 penetrates through the inner housing 10 to electrically connect the PCB 16. The switch button 1001 is electrically connected to the PCB 16, so that the user may control the on and off of the dust collector 1 through the switch button 1001, and meet the requirement of the user on selecting different built-in functions of the dust collector 1. The switch button 1001 may be a physical button, a touch button, or an induction button.

As shown in Fig. 1 to Fig. 3, the dust collector 1 with a portable power source function according to an embodiment of the present application further includes a light guide silicone piece 1002. The light guide silicone piece 1002 is arranged on the outer housing 50. An indicator lamp is arranged on the PCB 16. The light guide silicone piece 1002 is opposite to the indicator lamp. Light of the indicator lamp may transmit through the light guide silicone piece 1002. The indicator lamp is arranged, which can prompt a working state of the dust collector 1, so as to improve the use experience of the user. For example, the indicator lamp may flash during charging, or the indicator lamp may flash when the duct collector 1 works. When the switch button 1001 is operated, the light emitted from the indicator lamp may present a combination of one of corresponding text, patterns, and colors and flashing on the light guide silicone piece 1002 or flash. The arrangement of the light guide silicone piece 1002 can also realize a plurality of interaction functions of the portable power source, for example, displaying an electric quantity or specific functions, such as color ring light, and flashing and changing gradually.

As shown in Fig. 2, in the dust collector 1 with a portable power source function according to an embodiment of the present application, the air flow channel 13 includes a volute segment 131 and a straight line segment 132. The straight line segment 132 is communicated with an air outlet end of the volute segment 131. In a direction gradually away volute segment 131, a cross-section area of the straight line segment 132 is gradually reduced. Thus, the wind force of the air flow that flows out from the first air outlet 23 can be increased, so the force of the air flow can blow particles attached to the surface of the lens to further improve the dust removal effect of the dust collector 1.

As shown in Fig. 1 and Fig. 2, in the dust collector 1 with a portable power source function according to an embodiment of the present application, the centrifugal fan 14 includes an impeller 142 and a motor 144. In an axis direction of the impeller 142, the first air inlet 11 is positioned in one side of the impeller 142, the motor 144 is positioned on the other side of the impeller 142. The motor 144 is electrically connected to the impeller 142 to electrically connect the PCB 16.

As shown in Fig. 1, the dust collector 1 with a portable power source function according to an embodiment of the present application further includes a motor support frame 146. In the axis direction of the impeller 142, the motor support frame 146 is arranged on one side, close to the second housing 104, of the motor 144, and the motor support frame 146 is connected to the second housing 104. Thus, the layout of internal structures of the dust collector 1 is reasonable.

As shown in Fig. 4, a hanging ring is arranged on the outer housing 50. The hanging ring 1004 and the outer housing 50 are integrally formed. Since the volume of the dust collector 1 is small, the user may hang the dust collector 1, for example, on a bag, by penetrating a rope through the hanging ring 1004, which prevents the loss of the dust collector 1, and meanwhile, improves the portability of the dust collector 1.

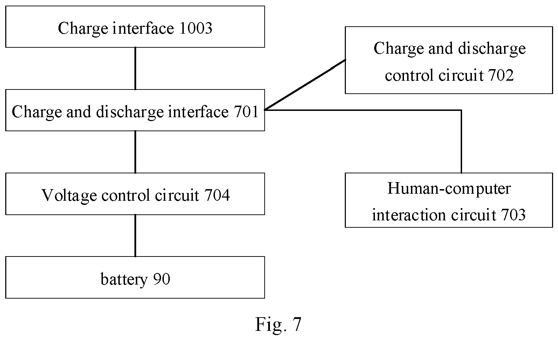

In the dust collector 1 with a portable power source function according to an embodiment of the present application, when portable charging and discharging are performed, a function of storing electric energy can also be completed, and charging and discharging can be completed according to the function of storing the electric energy, so as to realize the portable power source function. A module for implementing the portable power source function is a charge and discharge loop. The charge and discharge loop is as shown in Fig. 7 to Fig. 11.

As shown in Fig. 7, in the embodiment of the present application, the dust collector 1 with a portable power source function according to an embodiment of the present application further includes a charge and discharge loop. The charge and discharge loop includes a charge and discharge interface 701, a charge and discharge control circuit 702, a voltage control circuit 703, and a human-computer interaction circuit 704. The charge and discharge interface 701 is electrically connected to the charge interface 1003. The battery 90 is electrically connected to the voltage control circuit 703.

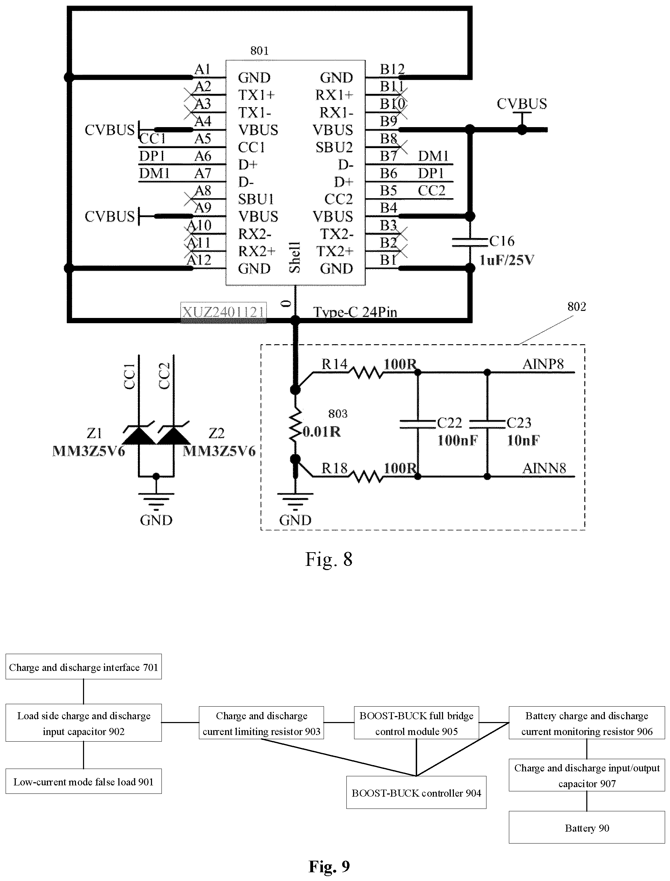

As shown in Fig. 8, in the embodiment of the present application, the charge and discharge interface 701 includes a Type-C interface 801 and an over-current monitoring module 802. A model number of the Type-C interface 801 is XUZ2401121. The Type-C interface 801 adopts a 24-frame interface and is electrically connected to the charge and discharge control circuit 802. In a discharging process, the Type-C interface 801 discharges. In a charging process, the Type-C interface 801 charges. The over-current monitoring module is electrically connected to an interface of the Type-C interface; and a charge and discharge current of the Type-C interface 801 is obtained through voltage division of a 0.01-ohm resistor 803, and is converted into a voltage signal and is transmitted to the charge and discharge control circuit 702. The voltage signal is transmitted to the charge and discharge control circuit 702 through a voltage difference between AINN8 and AINP8.

As shown in Fig. 9, in the embodiment of the present application, the charge and discharge control circuit 702 includes a low-current mode false load 901, a load side charge and discharge input capacitor 902, a charge and discharge current limiting resistor 903, a BOOST-BUCK controller 904, a BOOST-BUCK full bridge control module 905, a battery charge and discharge current monitoring resistor 906, and a charge and discharge input/output capacitor 907. The BOOST-BUCK controller 904 adopts SC8812A. The BOOST-BUCK controller 904 transmits a control instruction to the BOOST-BUCK full bridge control module 905 to control it to switch on or off a corresponding branch circuit, so as to realize the control of a power signal.

The battery 90 directly filters through the charge and discharge input/output capacitor 907, determines a current charge current through the battery charge and discharge current monitoring resistor 906, feeds the current charge current back to the BOOST-BUCK controller 904. The BOOST-BUCK controller 904 transmits the control instruction to the BOOST-BUCK full bridge control module 905 to complete current control of a charging and discharging process. The low-current mode false load 901 is configured to prevent the current from being too low to work. The load side charging and discharging input capacitor 902 and the charge and discharge current limiting resistor 903 perform online current monitoring, and the BOOST-BUCK controller 904 controls the current when it is determined that the current is over-high. The load side charging and discharging input capacitor 902 is configured to filter away current fluctuations fed back by a load side.

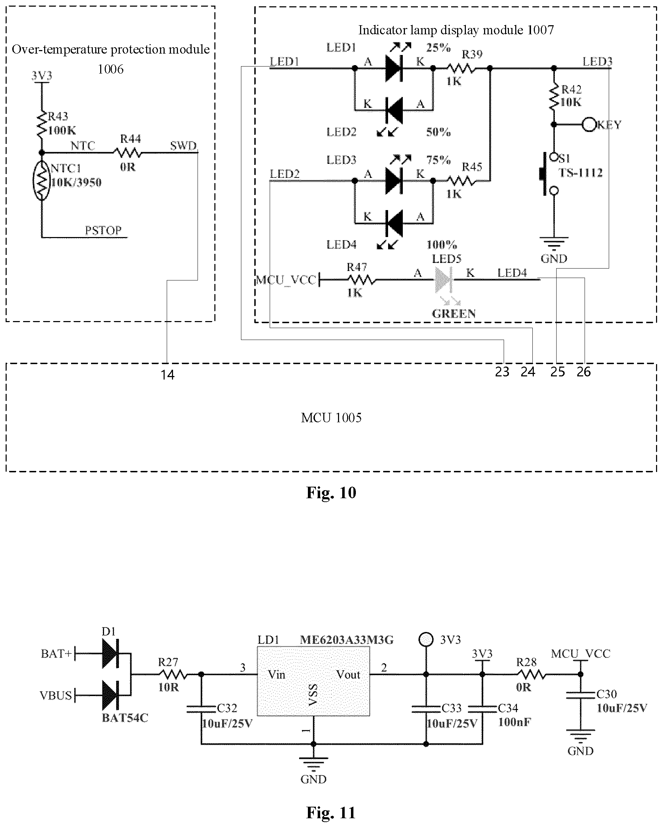

As shown in Fig. 10, in the embodiment of the present application, the human-computer interaction circuit 703 includes an MCU 1005, an over-temperature protection module 1006, an indicator lamp display module 1007. The MCU 1005 adopts a CS32G02X single chip microcomputer. A 23rd pin, a 24 pin, a 25th pin, and a 26th pin of the MCU 1005 are electrically connected to the indicator lamp display module 1007 to control the on/off of the indicator lamp of the indicator lamp display module 1007, and to display a current remaining electric quantity of the battery 90 through different indicator lamps. A 14th pin of the MCU 1005 is configured to receive an electric signal of the over-temperature protection module 1006, and determine whether the dust collector 1 with a portable power source function is in an overheat state.

As shown in Fig. 11, in the embodiment of the present application, the voltage control circuit 704 includes a voltage stabilizing chip 1101. The voltage stabilizing chip adopts ME6203A33M2G. A first pin of the voltage stabilizing chip 1101 is grounded. A third pin of the voltage stabilizing chip 1101 is connected to a positive electrode of the battery 90 through a diode D1 and a resistor R27, is grounded at the first pin of the voltage stabilizing chip 1101, and is connected in parallel with the third pin through a 10µF capacitor. The third pin of the voltage stabilizing chip 1101 serves as an output to provide 3.3 V stable voltage to the human-computer interaction circuit 703 and the charge and discharge control circuit 702.

In the embodiment of the present application, a high capacity polymer battery is used as a power source in the present application to drive a charge and discharge integrated circuit on a control circuit board, and a bidirectional charging and discharging function is realized through the TYPE-C interface of the control circuit board. Therefore, when not used as dust collector, this machine may be used as a portable power source to charge a device that needs to be charged.

It is to be understood that orientation or position relationships indicated by terms "upper", "lower", "front", "rear", "left", "right", "horizontal", "top", "inner", and the like are the orientation or position relationships shown based on the drawings, and are merely for facilitating describing the present application and simplifying the description, rather than indicating or implying that the apparatuses or elements must have particular orientations, and be constructed and operated in particular orientations. Thus, it cannot be construed as a limitation to the present application.

Terms "first", "second", and "third" are merely used for description and are not to be understood as indicating or implying relative importance or implicitly indicating the number of indicated technical features. Thus, features limited by "first", "second", and "third" may explicitly or implicitly include one or more features. In the description of the present application, unless otherwise specified, "a group" means two or more.

The previously described embodiments only express several implementations of the present application with specific and detailed description, but are not to be construed as a limitation to the patent scope of the present application. It is to be noted that a number of variations and modifications may be made by those of ordinary skill in the art without departing from the conception of the present application, and all fall within the scope of protection of the present application. Therefore, the protection scope of the patent of the present application is to be subject to the appended claims.

## Claims

1. A dust collector with a portable power source function, configured to remove dust from a lens of a photographic device, comprising:
an inner housing, wherein a first air inlet and a first air outlet are formed in the inner housing, an air flow channel is defined in the inner housing, the first air inlet is communicated with the first air outlet through the air flow channel, a centrifugal fan is arranged in the air flow channel, accommodation space is also defined in the inner housing, and the accommodation space is separated from the air flow channel;
a Printed Circuit Board (PCB), wherein the PCB is arranged in the accommodation space;
a battery, wherein the battery is arranged in the accommodation space, the battery and the PCB are arranged in a stacked manner, the battery is electrically connected with the PCB, and the battery is capable of storing and discharging electricity;
an outer housing, wherein a second air inlet and a second air outlet are formed in the outer housing, the second air inlet is opposite to the first air inlet, the second air outlet is opposite to the first air outlet, mounting space is defined in the outer housing, the inner housing is arranged in the mounting space, and the second air inlet is communicated with the second air outlet through the air flow channel; and
a charge interface, wherein the charge interface is arranged on the outer housing, the charge interface penetrates through the inner housing to electrically connect the battery, the charge interface is a TYPE-C interface, and the charge interface is capable of realizing a charging or discharging function.

2. The dust collector with a portable power source function according to claim 1, wherein a filter mesh that covers the first air inlet is arranged at the first air inlet, and a plurality of filter mesh holes in an array are formed in the filter mesh.

3. The dust collector with a portable power source function according to claim 1, wherein a plurality of limiting bosses are formed in the mounting space; a plurality of limiting columns are formed on an outer wall of the inner housing; and the limiting columns are matched with the limiting bosses one by one.

4. The dust collector with a portable power source function according to claim 2, wherein a filter mesh bracket is arranged on the outer housing; the filter mesh bracket is arranged in a circumferential direction of the second air inlet; a filter mesh mounting cover is arranged on the filter mesh bracket; and the filter mesh is arranged on the filter mesh mounting cover.

5. The dust collector with a portable power source function according to claim 4, wherein a filter element is arranged between the filter mesh and the filter mesh bracket; and the filter element is opposite to the second air inlet.

6. The dust collector with a portable power source function according to claim 5, wherein an air-inlet grille is arranged on the inner housing; and the air-inlet grille defines the first air inlet.

7. The dust collector with a portable power source function according to claim 1, wherein an air duct is arranged in the accommodation space; an air guide strip of the inner housing defines the air flow channel; a yielding slot is formed in an inner side wall of the air guide strip; and the air duct is embedded into the yielding slot.

8. The dust collector with a portable power source function according to claim 1, wherein a plurality of support ribs arranged at intervals are formed on an outer wall surface of the inner housing.

9. The dust collector with a portable power source function according to claim 1, further comprising:
a silicone air guide piece, wherein the silicone air guide piece is arranged on an outer wall surface of an air outlet end of the outer housing in a sleeving manner; a through hole is formed in the silicone air guide piece; and the through hole is communicated with the air flow channel.

10. The dust collector with a portable power source function according to claim 9, wherein a first boss is arranged in a circumferential direction of an outer wall surface of the outer housing; a first groove is annularly formed in a circumferential direction of the silicone air guide piece; and the first boss is embedded into the first groove.

11. The dust collector with a portable power source function according to claim 1, wherein the inner housing is a plastic piece; and the outer housing is a metal piece.

12. The dust collector with a portable power source function according to claim 1, further comprising:
a switch button, wherein the switch button is arranged on the outer housing, and the switch button penetrates through the inner housing to electrically connect the PCB.

13. The dust collector with a portable power source function according to claim 1, further comprising:
a light guide silicone piece, wherein the light guide silicone piece is arranged on the outer housing, an indicator lamp is arranged on the PCB, and the light guide silicone piece is opposite to the indicator lamp.

14. The dust collector with a portable power source function according to claim 1, wherein the air flow channel comprises a volute segment and a straight line segment; the straight line segment is communicated with an air outlet end of the volute segment; and in a direction gradually away from the volute segment, a cross-section area of the straight line segment is gradually reduced.

15. The dust collector with a portable power source function according to claim 1, wherein a hanging ring is arranged on the outer housing; and the hanging ring and the outer housing are integrally formed.

16. The dust collector with a portable power source function according to claim 1, further comprising a charge and discharge loop; the charge and discharge loop comprises a charge and discharge interface, a charge and discharge control circuit, a voltage control circuit, and a human-computer interaction circuit; the charge and discharge interface is electrically connected to the charge interface; and the battery is electrically connected to the voltage control circuit.

17. The dust collector with a portable power source function according to claim 16, wherein the charge and discharge interface comprises a Type-C interface and an over-current monitoring module; the Type-C interface adopts a 24-frame interface and is electrically connected to the charge and discharge control circuit; in a discharging process, the Type-C interface discharges; in a charging process, the Type-C interface charges; the over-current monitoring module is electrically connected to an interface of the Type-C interface; and a charge and discharge current of the Type-C interface is obtained through voltage division of a 0.01-ohm resistor, and is converted into a voltage signal and is transmitted to the charge and discharge control circuit.

18. The dust collector with a portable power source function according to claim 16, wherein the charge and discharge control circuit comprises a low-current mode false load, a load side charge and discharge input capacitor, charge and discharge current limiting resistor, a BOOST-BUCK controller, a BOOST-BUCK full bridge control module, a battery charge and discharge current monitoring resistor, and a charge and discharge input/output capacitor, wherein the BOOST-BUCK controller transmits an electric signal to the BOOST-BUCK full bridge control module to control an on state, so as to complete charge and discharge.

19. The dust collector with a portable power source function according to claim 16, wherein the human-computer interaction circuit comprises a Microcontroller Unit (MCU), an over-temperature protection module, an indicator lamp display module; the MCU adopts a CS32G02X single chip microcomputer; a 23rd pin, a 24 pin, a 25th pin, and a 26th pin of the MCU are electrically connected to the indicator lamp display module to control the on/off of the indicator lamp of the indicator lamp display module 1007, and to display a current remaining electric quantity of the battery 90 through different indicator lamps; a 14th pin of the MCU is configured to receive an electric signal of the over-temperature protection module, and determine whether the dust collector with a portable power source function is in an overheat state.

20. The dust collector with a portable power source function according to claim 16, wherein the voltage control circuit comprises a voltage stabilizing chip; the voltage stabilizing chip adopts ME6203A33M2G; a first pin of the voltage stabilizing chip is grounded; a third pin of the voltage stabilizing chip is connected to a positive electrode of the battery through a diode and a resistor, is grounded at the first pin of the voltage stabilizing chip, and is connected in parallel with the third pin through a capacitor; and the third pin of the voltage stabilizing chip serves as an output to provide 3.3V stable voltage to the human-computer interaction circuit and the charge and discharge control circuit.
